# EUROPÄISCHE PATENTSCHRIFT

(11) **EP 3 015 485 B1**
(45) Veröffentlichungstag und Bekanntmachung des Hinweises auf die Patenterteilung: **12.04.2017**
(21) Anmeldenummer: 14190673.5
(22) Anmeldetag: 28.10.2014
(51) Int. Cl.: C08G 18/67, C08G 18/81, C08G 18/22, C09D 175/16

(54) **Verfahren zur Herstellung strahlungshärtbarer Urethan(meth)acrylate**
Method for the preparation of radiation-curable urethane (meth)acrylates
Procédé de fabrication d'uréthane(méth)acrylate durcissable par rayonnement

(43) Veröffentlichungstag der Anmeldung: 04.05.2016
(73) Patentinhaber: BASF SE, 67056 Ludwigshafen am Rhein (DE)
(72) Erfinder: Roller, Sebastian, 68167 Mannheim (DE); Haaf-Kleinhubbert, Christina, 69502 Hemsbach (DE); Biehler, Manfred, 76831 Ilbesheim (DE)
(74) Vertreter: Reinhardt, Jürgen

(56) Entgegenhaltungen:
- WO-A1-2004/055090
- WO-A1-2014/063920
- DE-A1- 10 143 630

## Beschreibung

### Gebiet der Erfindung

Die Erfindung betrifft ein Verfahren zur Herstellung von strahlungshärtbaren Urethan(meth)acrylaten, die nach diesem Verfahren erhältlichen Urethan(meth)acrylate und deren Verwendung.

### Stand der Technik

Strahlungshärtbare Verbindungen finden zunehmend Verwendung als Beschichtungssysteme verschiedener Substrate.

EP-B-1,576,027 beschreibt ein im wesentlichen 3-schrittiges Verfahren zur Herstellung von strahlungshärtbaren Urethan(meth)acrylaten. Obligatorisch sind dabei die in dieser Patentschrift beschriebenen Schritte (a), (k) und (1).

### Beschreibung der Erfindung

Aufgabe der vorliegenden Erfindung war es, einkomponentige strahlungshärtbare Urethan-(meth)acrylate bereitzustellen, die sich durch gute Werte im Hinblick auf Abriebfestigkeit, Zähelastizität und Chemikalienresistenz auszeichnen. Insbesondere sollten die Parameter Abriebfestigkeit und Lagerstabilität im Vergleich zu den entsprechenden aus dem Stand der Technik bekannten Systemen verbessert sein.

Gegenstand der Erfindung sind strahlungshärtbare Urethan(meth)acrylate, die erhältlich sind, indem man folgende Schritte durchführt:
(r1) teilweise Umsetzung eines alkoxylierten Polyols (A) mit (Meth)acrylsäure (B) in Anwesenheit mindestens eines Veresterungskatalysators (C) und mindestens eines Polymerisationsinhibitors (D) sowie gegebenenfalls eines mit Wasser ein Azeotrop bildenden Lösungsmittels (E),
   (o1) gegebenenfalls Entfernen zumindest eines Teils des in r1) entstehenden Wassers aus dem Reaktionsgemisch, wobei o1) während und/oder nach r1) erfolgen kann,
   (o2) gegebenenfalls Neutralisation des Reaktionsgemischs,
   (o3) falls ein Lösungsmittel (E) eingesetzt wurde, gegebenenfalls Entfernen dieses Lösungsmittels durch Destillation und/oder
   (o4) Strippen mit einem unter den Reaktionsbedingungen inerten Gas,
(r2) Umsetzung des nach dem letzten der vorstehenden Reaktionsschritte erhaltenen Reaktionsgemisches mit einer mindestens zwei Epoxygruppen aufweisenden Verbindung (G) gegebenenfalls in Gegenwart eines Katalysators (H) und
(r3) Umsetzung des Reaktionsgemisches aus (r2) mit mindestens einem Polyisocyanat (J) und mindestens einem Hydroxyalkyl(meth)acrylat (K)-und gegebenenfalls mindestens einer weiteren eine oder mehrere gegenüber Isocyanat reaktive Gruppe enthaltenden Verbindung (M) in Gegenwart eines Katalysators (L),
mit der Maßgabe, dass es sich bei dem in Schritt (r3) eingesetzten Katalysator (L) um einen Wismut-haltigen Katalysator handelt.

Der Klarheit halber sei Folgendes festgestellt: Bei den angegebenen Schritten handelt es sich bei den Schritten (r1), (r2) und (r3) um die drei Kernschritte der Herstellung der erfindungsgemäßen strahlungshärtbaren Urethan(meth)acrylate, wobei es sich jeweils um chemische Reaktionen handelt.

Ein weiterer Erfindungsgegenstand ist ein Verfahren zur Herstellung strahlungshärtbarer Urethan(meth)acrylate, die erhältlich sind, indem man folgende Schritte durchführt:
(r1) teilweise Umsetzung eines alkoxylierten Polyols (A) mit (Meth)acrylsäure (B) in Anwesenheit mindestens eines Veresterungskatalysators (C) und mindestens eines Polymerisationsinhibitors (D) sowie gegebenenfalls eines mit Wasser ein Azeotrop bildenden Lösungsmittels (E),
   (o1) gegebenenfalls Entfernen zumindest eines Teils des in r1) entstehenden Wassers aus dem Reaktionsgemisch, wobei o1) während und/oder nach r1) erfolgen kann,
   (o2) gegebenenfalls Neutralisation des Reaktionsgemischs,
   (o3) falls ein Lösungsmittel (E) eingesetzt wurde, gegebenenfalls Entfernen dieses Lösungsmittels durch Destillation und/oder
   (o4) Strippen mit einem unter den Reaktionsbedingungen inerten Gas,
(r2) Umsetzung des nach dem letzten der vorstehenden Reaktionsschritte erhaltenen Reaktionsgemisches mit einer mindestens zwei Epoxygruppen aufweisenden Verbindung (G) gegebenenfalls in Gegenwart eines Katalysators (H) und
(r3) Umsetzung des Reaktionsgemisches aus (r2) mit mindestens einem Polyisocyanat (J) und mindestens einem Hydroxyalkyl(meth)acrylat (K) und gegebenenfalls mindestens einer weiteren eine oder mehrere gegenüber Isocyanat reaktive Gruppe enthaltenden Verbindung (M) in Gegenwart eines Katalysators (L),
mit der Maßgabe, dass es sich bei dem in Schritt (r3) eingesetzten Katalysator (L) um einen Wismut-haltigen Katalysator handelt.

Überraschenderweise hat sich gezeigt, dass Urethanmethacrylate, die nach dem erfindungsgemäßen Verfahren unter Einsatz des speziellen Katalysators (L) im Schritt (r3) erhalten werden, wobei es sich um einen Wismut-haltigen Katalysator handelt, die oben genannte Aufgabenstellung in jeder Hinsicht ausgezeichnet erfüllen, und im Vergleich zu den Urethan(meth)acrylaten, die gemäß der Offenbarung oben zitierten der EP-B-1,576,027 eine ganz erheblich bessere Abriebfestigkeit und Lagerstabilität aufweisen.

### Zu Schritt (r1)

Im Folgenden werden Einzelheiten zum Reaktionsschritt (r1) ausgeführt. Dazu gehören einerseits Ausführungen zu den Komponenten (A), (B), (C), (D) und (E) und andererseits Ausführungen zu optionalen Schritten (o1) (o2), (o3), (o4).

Der Begriff (Meth)acrylsäure bzw. (Meth)acrylsäureester steht in dieser Schrift für Methacrylsäure und Acrylsäure bzw. Methacrylsäureester und Acrylsäureester. Bevorzugt ist erfindungsgemäß Acrylsäure.
Bei den Verbindungen (A) handelt es sich um alkoxylierte Polyole. Im Folgenden werden nähere Angaben zu den Polyolen gemacht, die den Verbindungen (A) zu Grunde liegen. Ebenfalls werden Angaben über die Verbindungen (A) gemacht.

Die erfindungsgemäß einzusetzenden alkoxylierte Polyole (A) sind Verbindungen, die mindestens zwei Hydroxyfunktionen (-OH) pro Molekül aufweisen. In einer Ausführungsform weisen die alkoxylierten Polyole (A) drei bis zehn, vorzugsweise drei bis sechs, und insbesondere drei bis vier OH-Funktionen pro Molekül auf. Ganz besonders bevorzugt sin diejenigen alkoxylierte Polyole (A), die drei OH-Funktionen pro Molekül aufweisen.

Die den Verbindungen (A) zu Grunde liegenden Polyole können aliphatisch, cycloaliphatisch oder aromatisch sein, bevorzugt aliphatisch oder cycloaliphatisch und ganz besonders bevorzugt aliphatisch, geradkettig oder verzweigt und gegebenenfalls substituiert mit funktionellen Gruppen.
In der Regel weisen die den Verbindungen (A) zu Grunde liegenden Polyole 4 bis 50 Kohlenstoffatome auf, bevorzugt 5 bis 40, besonders bevorzugt 6 bis 30 und ganz besonders bevorzugt 8 bis 26.
Das Molgewicht der den Verbindungen (A) zu Grunde liegenden Polyole beträgt in der Regel, wenn nicht anders angegeben, unter 2500 g/mol, bevorzugt unter 2000 g/mol, besonders bevorzugt 106 - 1500 g/mol, ganz besonders bevorzugt 150 - 1200 g/mol und insbesondere 170 - 1050 g/mol. Die Polydispersität M_{w}:Mₙ beträgt in der Regel von 1 bis 5, bevorzugt von 1 bis 3.
Die den Verbindungen (A) zu Grunde liegenden Polyole können funktionelle Gruppen tragen oder unfunktionalisiert sein, bevorzugt tragen sie keine weiteren funktionellen Gruppen.

Beispiele für geeignete Polyole, die den Verbindungen (A) zu Grunde liegen, sind Trimethylolbutan, Trimethylolpropan, Trimethylolethan, Neopentylglykol, Hydroxypivalinsäureneopentylglykolester, Pentaerythrit, Glycerin, 1,2-Ethylenglykol, 1,2-Propylenglykol, 1,3-Propandiol, 2-Ethyl-1,3-Propandiol, 2-Methyl-1,3-Propandiol, Hydrochinon, Bisphenol A, Bisphenol F, Bisphenol B, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, But-2-en-1,4-diol und But-2-in-1,4-diol.

Die den Verbindungen (A) zu Grunde liegenden Polyole können auch zusätzliche funktionelle Gruppen tragen wie z.B. Etherfunktionen (-O-), Carboxylfunktionen (-COOH) oder C₁₋₆-Alkyloxycarbonylfunktionen (Estergruppen), wobei unter "C₁₋₆-Alkyl-" die Reste Methyl, Ethyl, *iso*-Propyl, n-Propyl, n-Butyl, *iso*-Butyl, *sek*-Butyl, *tert*-Butyl, n-Pentyl, iso-Pentyl-, neo-Pentyl-, n-Hexyl-, iso-Hexyl- oder neo-Hexyl- zu subsumieren sind.

Beispiele für solche funktionalisierten Polyole sind Ditrimethylolpropan, Dipentaerythrit, Dimethylolpropionsäure, Dimethylolbuttersäure, Trimethylolessigsäure, Hydroxypivalinsäure und die 2-Hydroxyethyl- oder C₁₋₄-Alkylester dieser genannten Säuren, wobei unter "C₁₋₄-Alkyl-" die Reste Methyl, Ethyl, *iso*-Propyl, n-Propyl, n-Butyl, *iso*-Butyl, *sek*-Butyl und *tert-*Butyl zu subsumieren sind.

Besonders bevorzugte Polyole sind solche der Formel (I):

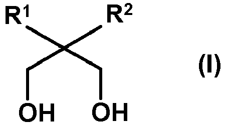

Darin bedeuten
- R¹, R²: unabhängig voneinander Wasserstoff, C₁₋₁₀-Alkyl, bevorzugt C₁₋₄-Alkyl, C₁₋₁₀-Hydroxyalkyl, bevorzugt C₁₋₄-Hydroxyalkyl, Carboxyl oder C₁₋₄-Alkyloxycarbonyl, bevorzugt Wasserstoff, Hydroxymethyl und C₁₋₄-Alkyl und besonders bevorzugt Hydroxymethyl und C₁₋₄-Alkyl.

Dabei können die Alkylreste jeweils geradkettig oder verzweigt sein.

Beispiele für R1 und R2 sind Wasserstoff, Methyl, Ethyl, *iso*-Propyl, n-Propyl, n-Butyl, *iso-*Butyl, *sek*-Butyl, *tert-*Butyl*,* n-Pentyl, n-Hexyl, n-Heptyl, n-Octyl, n-Decyl, Hydroxymethyl, Carboxyl, Methoxycarbonyl, Ethoxycarbonyl oder n-Butoxycarbonyl.
Vorzugsweise werden die Reste R¹ und R², ausgewählt aus der Gruppe Wasserstoff, Hydroxymethyl, Methyl und Ethyl und insbesondere aus der Gruppe Hydroxymethyl, Methyl und Ethyl.

Besonders bevorzugte mehrwertige Alkohole der Formel (I) sind Trimethylolbutan, Trimethylolpropan, Trimethylolethan, Neopentylglykol, Pentaerythrit, 2-Ethyl-1,3-Propandiol, 2-Methyl-1,3-Propandiol, 1,3-Propandiol, Dimethylolpropionsäure, Dimethylolpropionsäuremethylester, Dimethylolpropionsäureethylester, Dimethylolbuttersäure, Dimethylolbuttersäuremethylester oder Dimethylolbuttersäureethylester.

Vorzugsweise wählt man die Verbindungen der Formel (I) aus der Gruppe Neopentylglykol, Trimethylolpropan, Pentaerythrit und Dimethylolpropionsäure.
Ganz besonders bevorzugt ist es, die Verbindungen der Formel (I) aus der Gruppe Neopentylglykol, Trimethylolpropan und Pentaerythrit und insbesondere Trimethylolpropan und Pentaerythrit zu wählen.

Beispiele für Zuckeralkohole als Polyole sind Sorbit, Mannit, Maltit, Isomalt, Diglycerol, Threit, Erythrit, Adonit (Ribit), Arabit (Lyxit), Xylit und Dulcit (Galactit).

Alkoxylierte Polyole (A) sind erfindungsgemäß solche, die durch Umsetzung eines Polyols mit mindestens einem Alkylenoxid erhältlich sind.

Bevorzugte Beispiele für derartige alkoxylierte Polyole (A) sind die Alkoxylierungsprodukte (IIa), (IIb) oder (IIc) von Polyolen der Formel (I), 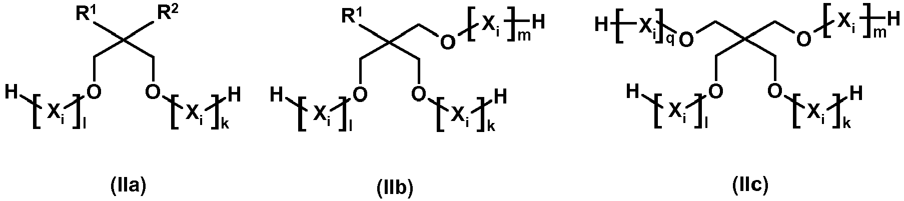 worin
- R¹, R² die oben in Formel (I) genannten Bedeutungen haben,
- k, l, m, q unabhängig voneinander je für eine ganze Zahl von 0 bis 10, bevorzugt 2 bis 7, besonders bevorzugt 3 bis 6 und insbesondere 5 steht, wobei die Summe k+l+m+q eine Zahl im Bereich von 1 bis 20 ergibt, und
- jedes Xᵢ für i = 1 bis k, 1 bis 1, 1 bis m und 1 bis q unabhängig voneinander ausgewählt sein kann aus der Gruppe CH₂CH₂O, CH₂CH(CH₃)O, CH(CH₃)CH₃O, CH₂C(CH₃)₂O, C(CH₃)₂CH₂O, CH₂CH(Vin)O, CHVinCH₂O, CH₂CH(Ph)O und CH(Ph)CH₂O, bevorzugt aus der Gruppe CH₂CH₂O, CH₂CH(CH₃)O und CH(CH₃)CH₂O, und besonders bevorzugt CH₂CH₂O, worin (Ph) für Phenyl und (Vin) für Vinyl steht.

Ausdrücklich sei festgestellt, dass die Angaben für die Bausteine Xᵢ nicht dahingehend interpretiert werden dürfen, dass Anfang und Ende dieser Bausteine beliebig miteinander kombiniert werden können. So wäre es unzulässig, etwa zwei Bausteine CH₂CH₂O so zu verknüpfen, dass eine Gruppierung CH₂CH₂OOCH₂CH₂ entsteht. Vielmehr ist dem Fachmann klar, dass die Formeln (IIa), (IIb) oder (IIc) Alkoxylierungsprodukte umschreiben.

Unter diesen sind die Verbindungen der Formel (IIb) besonders bevorzugt.

Bevorzugt handelt es sich bei den Alkoxylierungsprodukten (IIa), (IIb) oder (IIc) um ein- bis 20fach, besonders bevorzugt 5- bis 20fach, ganz besonders bevorzugt 10 - 20fach und insbesondere 12 - 20fach ethoxyliertes, propoxyliertes oder gemischt ethoxyliertes und propoxyliertes und insbesondere ausschließlich ethoxyliertes Trimethylolpropan, Trimethylolethan oder Pentaerythrit.

Die angegebenen Alkoxylierungsgrade beziehen sich jeweils auf den mittleren Alkoxylierungsgrad, so dass statistisch auch nicht-ganzzahlige Alkoxylierungsgrade vorkommen können.

Die Angaben zum zahlenmittleren und gewichtsmittleren Molekulargewicht Mₙ und M_{w} beziehen sich auf gelpermeationschromatographische Messungen, wobei Polystyrol als Standard und Tetrahydrofuran als Elutionsmittel verwendet wurde. Die Methode ist im Analytiker Taschenbuch Bd. 4, Seiten 433 bis 442, Berlin 1984 beschrieben.

Die Polydispersität M_{w}/Mₙ, der Quotient aus dem gewichtsmittleren und dem zahlenmittleren Molekulargewicht der alkoxylierten Polyole (A), stellt ein Maß für die Molekulargewichtsverteilung dar und hat im Idealfall den Wert 1, jedoch genügen für die Praxis in der Regel Werte unter 4,0, bevorzugt unter 3,5.

Beispiele für alkoxylierte Zuckeralkohole sind solche Verbindungen, die aus Zuckeralkoholen, beispielsweise den oben aufgeführten Zuckeralkoholen, durch Alkoxylierung, beispielsweise mit den oben aufgeführten Alkylenoxiden, bevorzugt mit Ethylenoxid und/oder Propylenoxid und ganz besonders bevorzugt mit Ethylenoxid erhältlich sind.

### Beispiele dafür sind

- die aufgeführten Tetrole, die im statistischen Mittel pro mol Zuckeralkohol 2 - 30fach, bevorzugt 2 - 20fach, besonders bevorzugt 3-10fach und insbesondere 3, 4, 5, 6, 7 oder 8fach alkoxyliert sind,
- die aufgeführten Pentole, die im statistischen Mittel pro mol Zuckeralkohol 3 - 35fach, bevorzugt 3-28fach, besonders bevorzugt 4-20fach und insbesondere 4, 5, 6, 7, 8, 9 oder 10fach alkoxyliert sind,
- höhere Zuckeralkohole, die im statistischen Mittel pro mol Zuckeralkohol 4-50fach, bevorzugt 6-40fach, besonders bevorzugt 7-30fach, ganz besonders bevorzugt 8-20fach und insbesondere 10-15fach alkoxyliert sind.

Alkoxylierungen, also die Umsetzung von ein- oder mehrwertigen Alkoholen mit Alkylenoxiden ist dem Fachmann notorisch vertraut. Üblicherweise wird dabei der entsprechende Alkohol in Gegenwart eines Katalysators bei erhöhter Temperatur mit der gewünschten Menge eines Alkylenoxids umgesetzt.

Werden gemischt alkoxylierte Alkohole eingesetzt, so können die darin enthaltenen unterschiedlichen Alkoxygruppen zueinander im molaren Verhältnis von beispielsweise 0,05 - 20 : 1, bevorzugt 0,1 - 10 : 1 und besonders bevorzugt 0,2 - 5 : 1 stehen.

An die Viskosität der erfindungsgemäß einzusetzenden alkoxylierten Polyole (A) werden keine besonderen Ansprüche gestellt, außer dass sie bei einer Temperatur bis zu ca. 80 °C problemlos pumpbar sein sollten, bevorzugt sollten sie eine Viskosität unter 2000 mPas aufweisen, bevorzugt unter 1500 mPas und ganz besonders bevorzugt unter 1000 mPas bei 60 °C.

Unter (Meth)acrylsäure (B) ist, wie oben angeführt, Methacrylsäure oder Acrylsäurezu verstehen. Acrylsäure ist als Verbindung (B) bevorzugt.

In einer Ausführungsform beträgt das Molverhältnis von alkoxyliertem Polyol (A) : (Meth)acrylsäure (B) bei der Veresterung 1 : 0,75 bis 2,5 und vorzugsweiset 1 : 0,8 bis 2. Ein Verhältnis von 1 : 0,9 bis 1,5 und insbesondere 1 : 1 - 1,2 ist besonders bevorzugt.

Für die Veresterung können alle dem Fachmann einschlägig bekannten Verfahren herangezogen werden.

Veresterungskatalysatoren (C) sind vorzugsweise Schwefelsäure, Aryl- oder Alkylsulfonsäuren oder Gemische davon. Beispiele für Arylsulfonsäuren sind Benzolsulfonsäure, para-Toluolsulfonsäure oder Dodecylbenzolsulfonsäure. Beispiele für Alkylsulfonsäuren sind Methansulfonsäure, Ethansulfonsäure oder Trifluormethansulfonsäure. Auch stark saure Ionentauscher oder Zeolithe sind als Veresterungskatalysatoren einsetzbar. Bevorzugt sind para-Toluolsulfonsäure, Schwefelsäure und Ionentauscher.
Sie werden in der Regel in einer Menge von 0,1 - 5 Gew.-%, bezogen auf das Veresterungsgemisch, eingesetzt, bevorzugt 0,15 - 5, besonders bevorzugt 0,2 - 4 und ganz besonders bevorzugt 0,25 - 3 Gew.-%.

Falls erforderlich kann der Veresterungskatalysator (C) aus dem Reaktionsgemisch mit Hilfe eines Ionenaustauschers entfernt werden. Der Ionenaustauscher kann dabei direkt in das Reaktionsgemisch gegeben und anschließend abfiltriert oder das Reaktionsgemisch kann über eine Ionenaustauscherschüttung geleitet werden.

Bevorzugt wird der Veresterungskatalysator (C) im Reaktionsgemisch belassen. Handelt es sich jedoch bei dem Katalysator um einen Ionentauscher, so wird dieser bevorzugt entfernt, beispielsweise durch Filtration.

Als Polymerisationsinhibitoren (D) können beispielsweise Hydrochinon, Hydrochinonmonomethylether, 2,5-Di-t-butylhydrochinon, 2,6-Di-t-butyl-p-cresol, Nitrosoverbindungen wie Isoacrylnitrit, Nitrosodiphenylamin oder N-Nitroso-cyclohexylhydroxylamin, Methylenblau, Phenothiazin, Gerbsäure oder Diphenylamin eingesetzt werden. Es ist im Rahmen der vorliegenden Erfindung auch möglich, zwei oder mehr dieser Polymerisationsinhibitoren gemeinsam einzusetzen. Die Polymerisationsinhibitoren werden vorzugsweise in Mengen von 1 bis 10000 ppm, insbesondere in Mengen von 100 bis 1000 ppm, jeweils bezogen auf den gesamten Ansatz, eingesetzt.

Als Polymerisationsinhibitoren sind weiterhin geeignet phenolische Verbindungen, Amine, Nitroverbindungen, phosphor- oder schwefelhaltige Verbindungen, Hydroxylamine und N-Oxyle, sowie gegebenenfalls Gemische davon.

Bevorzugt sind Polymerisationsinhibitoren aus der Gruppe der Phenothiazin, der N-Oxyle und der phenolischen Verbindungen.

N-Oxyle (Nitroxyl- oder N-Oxyl-Radikale, Verbindungen, die wenigstens eine NO-Gruppe aufweisen), sind z.B. 4-Hydroxy-2,2,6,6-tetramethyl-piperidin-N-oxyl oder 4-Oxo-2,2,6,6-tetramethyl-piperidin-N-oxyl.

Phenolische Verbindungen sind z.B. Alkylphenole, beispielsweise 2-tert.-Butyl-4-methylphenol, 6-tert.-Butyl-2,4-dimethyl-phenol, 2,6-Di-tert.-Butyl-4-methylphenol, Brenzcatechin (1,2-Dihy-droxybenzol), Bisphenol A, Bisphenol F, Bisphenol B, Koresin® der BASF AG, Irganox® 565, 1141, 1192, 1222 und 1425 der Firma Ciba Spezialitätenchemie, Aminophenole, wie z.B. para-Aminophenol, Nitrosophenole, wie z.B. para-Nitrosophenol, Alkoxyphenole, beispielsweise 2-Methoxyphenol (Guajacol, Brenzcatechinmonomethylether), 2-Ethoxyphenol, 2-Isopropoxy-phenol, 4-Methoxyphenol (Hydrochinonmonomethylether), Tocopherole, Chinone und Hydro-chinone wie z.B. Hydrochinon, 2,5-Di*-tert.-*Butylhydrochinon, Benzochinon, p-Phenoxyphenol, Anthrachinon oder 2,5-Di-tert.-Amylhydrochinon.

Aromatische Amine sind z.B. N,N-Diphenylamin, Phenylendiamine sind z.B. N,N'-Dialkyl-para-phenylendiamin, beispielsweise N,N'-Di-*sek*-butyl-para-phenylendiamin, Hydroxylamine sind z.B. N,N-Diethylhydroxylamin, phosphorhaltige Verbindungen sind z.B. Triphenylphosphin, Triphenylphosphit oder Triethylphosphit, schwefelhaltige Verbindungen sind z.B. Diphenylsulfid.

Bevorzugt sind Phenothiazin, p-Aminophenol, p-Nitrosophenol, 2-*tert*.-Butylphenol, *4-tert.-*Butylphenol, 2,4-di-*tert*.-Butylphenol, 2-Methyl-4-*tert*.-Butylphenol, 4-*tert*.-Butyl-2,6-dimethyl-phenol, Hydrochinon und/oder Hydrochinonmonomethylether und N,N'-Di-*sek*-butyl-para-phenylendiamin.

Ganz besonders bevorzugt sind Phenothiazin, Hydrochinonmonomethylether und Gemische daraus.

Weiterhin lasen sich phosphorhaltige Verbindungen, wie z.B. Triphenylphosphin, Triphenylphosphit, Hypophosphorige Säure oder Triethylphosphit einsetzen, gegebenenfalls in Kombination mit Metallsalzen, wie beispielsweise die Chloride, Dithiocarbamate, Sulfate, Salicylate oder Acetate von Kupfer, Mangan, Cer, Nickel oder Chrom.

Die Art der Zugabe des Polymerisationsinhibitors ist nicht beschränkt. Der zugesetzte Polymerisationsinhibitor kann jeweils einzeln oder als Gemisch zugesetzt werden, in flüssiger oder in einem geeigneten Lösungsmittel gelöster Form, wobei das Lösungsmittel selber ein Polymerisationsinhibitor sein kann.

Wird ein Gemisch mehrerer Polymerisationsinhibitoren eingesetzt, so können diese auch unabhängig voneinander in unterschiedlichen Lösungsmitteln gelöst werden.

Das Polymerisationsinhibitor(gemisch) (D) wird vorzugsweise in einer Gesamtmenge von 0,01 - 1 Gew.-%, bezogen auf das Veresterungsgemisch, eingesetzt, bevorzugt 0,02 - 0,8, besonders bevorzugt 0,05 - 0,5 Gew.-%.

Zur weiteren Unterstützung der Stabilisierung kann ein sauerstoffhaltiges Gas, bevorzugt Luft oder ein Gemisch aus Luft und Stickstoff (Magerluft) anwesend sein.

Erfindungsgemäß einsetzbare Lösungsmittel (E) sind besonders solche, die sich zur azeotropen Entfernung des Reaktionswassers, falls gewünscht, eignen, vor allem aliphatische, cycloaliphatische und aromatische Kohlenwasserstoffe oder Gemische davon.

Vorzugsweise kommen n-Pentan, n-Hexan, n-Heptan, Cyclohexan, Methylcyclohexan, Benzol, Toluol oder Xylol zur Anwendung. Besonders bevorzugt sind Cyclohexan, Methylcyclohexan und Toluol.

Im Hinblick auf den optionalen Schritt (o1) - also die Abtrennung des Reaktionswassers - gilt Folgendes: Das bei der Reaktion in Schritt (r1) bei der Veresterung von alkoxyliertem Polyol (A) mit (Meth)acrylsäure (B) entstehende Reaktionswasser kann während oder nach der Veresterung abdestilliert werden, wobei dieser Vorgang durch ein mit Wasser ein Azeotrop bildendes Lösungsmittel unterstützt werden kann. Vorzugsweise wird der wesentliche Teil des während der Veresterung in Schritt (r1) entstehenden Wassers abgetrennt. Als Lösungsmittel (E) zur azeotropen Entfernung des Reaktionswassers eignen sich die oben angeführten Verbindungen.

Die Veresterung in Gegenwart eines Lösungsmittels ist im Zuge des Schrittes (r1) bevorzugt. Die eingesetzte Menge an Lösungsmittel beträgt dabei insbesondere 5 - 100 Gew.-%, vorzugsweise 10 - 100 Gew.-%, besonders bevorzugt 15 bis 100 Gew.-% bezogen auf die Summe von Polyalkohol und Carbonsäure (B).

Falls das im Reaktionsgemisch enthaltene Wasser nicht über ein azeotropbildendes Lösungsmittel entfernt wird, so kann man es gewünschtenfalls über ein Strippen mit einem inerten Gas, bevorzugt einem sauerstoffhaltigen Gas wie Luft oder Magerluft entfernen.

In einer Ausführungsform wird die Reaktionstemperatur bei der Veresterung r1) auf Werte im Bereich von 40 - 160 °C, bevorzugt 60 - 140°C und besonders bevorzugt 80 - 120°C eingestellt. Die Temperatur kann im Reaktionsverlauf gleich bleiben oder ansteigen, bevorzugt wird sie im Reaktionsverlauf angehoben. In diesem Fall ist die Endtemperatur der Veresterung um 5 - 30 °C höher als die Anfangstemperatur. Falls ein Lösungsmittel eingesetzt wird, so kann dieses über die dem Reaktor aufgesetzte Destillationseinheit vom Reaktionsgemisch abdestilliert werden. Das Destillat kann wahlweise entfernt werden, oder, nach Kondensation, in einen Phasentrennapparat geführt werden. Die Veresterung kann drucklos aber auch bei Überdruck oder Unterdruck durchgeführt werden, vorzugsweise wird bei normalem Druck gearbeitet. Die Reaktionszeit beträgt in der Regel 2 - 20 Stunden, vorzugsweise 4 - 17 und besonders bevorzugt 7 bis 15 Stunden.

Die Reihenfolge der Zugabe der einzelnen Reaktionskomponenten bei der Veresterung (r1) ist erfindungsgemäß nicht kritisch. Es können alle Komponenten gemischt vorgelegt und anschließend aufgeheizt werden oder es können eine oder mehrere Komponenten nicht oder nur teilweise vorgelegt und erst nach dem Aufheizen zugegeben werden.

Der Verlauf der Veresterung (r1) kann durch Verfolgung der ausgetragenen Wassermenge und/oder die Abnahme der (Meth)acrylsäurekonzentration im Reaktor verfolgt werden.

Die Reaktion kann beispielsweise beendet werden, sobald 75 % der theoretisch zu erwartenden Wassermenge durch das Lösungsmittel ausgetragen worden sind, bevorzugt bei mindestens 80% und besonders bevorzugt bei mindestens 85%.

Auf ein Entfernen des Reaktionswassers kann auch zumindest teilweise verzichtet werden. In diesem Fall verbleibt ein wesentlicher Teil der entstandenen Wassermenge im Reaktionsgemisch. Während oder nach der Reaktion wird lediglich der Anteil an Wasser aus dem Reaktionsgemisch entfernt, der durch die Flüchtigkeit bei der angelegten Temperatur bestimmt ist und es werden darüber hinaus keine Maßnahmen zur Abtrennung des entstandenen Reaktionswassers durchgeführt. So können beispielsweise mindestens 10 Gew.-% des entstandenen Reaktionswassers im Reaktionsgemisch verbleiben, bevorzugt mindestens 20 Gew.-%, besonders bevorzugt mindestens 30 Gew.-%, ganz besonders bevorzugt mindestens 40 und insbesondere mindestens 50 Gew.-%.

Nach Beendigung der Veresterung (r1) kann das Reaktorgemisch auf übliche Weise auf eine Temperatur im Bereich von 10 bis 30 °C abgekühlt werden und gegebenenfalls durch Zugabe von Lösungsmittel, das das gleiche wie das gegebenenfalls zur azeotropen Entfernung von Wasser verwendete Lösungsmittel oder ein anderes sein kann, eine gewünschte Zielesterkonzentration eingestellt werden.

Falls erforderlich kann das Reaktionsgemisch (r1) einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispiels-weise 0,1 - 50 Gew.-%, bevorzugt 0,5 bis 25 Gew.-%, besonders bevorzugt 1 - 10 Gew.-% bei Temperaturen von beispielsweise 10 bis 100 °C, bevorzugt 20 bis 80 °C und besonders bevorzugt 30 bis 60 °C unterworfen werden.

Dies kann durch Zugabe des pulver- oder granulatförmigen Entfärbungsmittels zum Reaktionsgemisch und nachfolgender Filtration oder durch Überleiten des Reaktionsgemisches über eine Schüttung des Entfärbungsmittels in Form beliebiger, geeigneter Formkörper erfolgen.

Die Entfärbung des Reaktionsgemisches kann an beliebiger Stelle des Aufarbeitungsverfahrens erfolgen, beispielsweise auf der Stufe des rohen Reaktionsgemisches oder nach gegebenenfalls erfolgter Vorwäsche, Neutralisation, Wäsche oder Lösungsmittelentfernung.

Das in Schritt (r1) erhaltene Reaktionsgemisch kann gewünschtenfalls einer Vorwäsche (o5) und/oder einer Neutralisation o2) und/oder einer Nachwäsche (o6) unterworfen werden, bevorzugt lediglich einer Neutralisation (o2). Gegebenenfalls können Neutralisation (o2) und Vorwäsche (o5) in der Reihenfolge auch vertauscht werden.

Zur Vor- oder Nachwäsche (o5) oder (o6) wird das Reaktionsgemisch in einem Waschapparat mit einer Waschflüssigkeit, beispielsweise Wasser oder einer 5 - 30 Gew.-%-igen, bevorzugt 5 - 20, besonders bevorzugt 5 - 15 Gew.-%-igen Kochsalz-, Kaliumchlorid-, Ammoniumchlorid-, Natriumsulfat- oder Ammoniumsulfatlösung, bevorzugt Wasser oder Kochsalzlösung, behandelt. Das Mengenverhältnis Reaktionsgemisch : Waschflüssigkeit beträgt in der Regel 1: 0,1 - 1, bevorzugt 1 : 0,2 - 0,8, besonders bevorzugt 1 : 0,3 - 0,7.

Die Wäsche oder Neutralisation kann beispielsweise in einem Rührbehälter oder in anderen herkömmlichen Apparaturen, z.B. in einer Kolonne oder Mixer-Settler-Apparatur, durchgeführt werden.

Die Vorwäsche (o5) wird vorzugsweise dann eingesetzt, wenn Metallsalze, bevorzugt Kupfer oder Kupfersalze als Inhibitoren (mit)verwendet werden.

Eine Nachwäsche (o6) kann zur Entfernung von Base- oder Salzspuren aus dem in (o2) neutralisierten Reaktionsgemisch vorteilhaft sein.

Zur Neutralisation (o2) kann das gegebenenfalls vorgewaschene Reaktionsgemisch, das noch geringe Mengen an Katalysator und die Hauptmenge an überschüssiger (Meth)acrylsäure (B) enthalten kann, mit einer 5 - 25, bevorzugt 5 - 20, besonders bevorzugt 5 - 15 Gew.-%igen wäßrigen Lösung einer Base, wie beispielsweise Alkali- oder Erdalkalimetalloxide, hydroxide, carbonate oder hydrogencarbonate, bevorzugt Natronlauge, Kalilauge, Natriumhydrogencarbonat, Natriumcarbonat, Kaliumhydrogencarbonat, Kalziumhydroxid, Kalkmilch, Ammoniak, Ammoniakwasser oder Kaliumcarbonat, der gegebenenfalls 5 - 15 Gew.-% Kochsalz, Kaliumchlorid, Ammoniumchlorid oder Ammoniumsulfat zugesetzt sein können, besonders bevorzugt mit Natronlauge oder Natronlauge-Kochsalz-Lösung, neutralisiert werden. Der Neutralisationsgrad beträgt bevorzugt 5 bis 60 Mol%, vorzugsweise 10 bis 40 Mol%, besonders bevorzugt 20 bis 30 Mol%, bezogen auf die Säuregruppen enthaltenden Monomere.

Die Zugabe der Base erfolgt in einer Weise, dass die Temperatur im Apparat nicht über 60 °C ansteigt, bevorzugt zwischen 20 und 35 °C beträgt und der pH-Wert 4 - 13 beträgt. Die Abfuhr der Neutralisationswärme erfolgt vorzugsweise durch Kühlung des Behälters mit Hilfe von innenliegenden Kühlschlangen oder über eine Doppelwandkühlung.

Das Mengenverhältnis Reaktionsgemisch : Neutralisationsflüssigkeit beträgt in der Regel 1: 0,1 1 - 1, bevorzugt 1 : 0,2 - 0,8, besonders bevorzugt 1 : 0,3 - 0,7.

Sofern ein Lösungsmittel im Reaktionsgemisch enthalten ist, so kann dieses durch Destillation im wesentlichen entfernt werden. Bevorzugt wird gegebenenfalls enthaltenes Lösungsmittel nach Wäsche und/oder Neutralisation aus dem Reaktionsgemisch entfernt, falls gewünscht kann dieses aber auch vor der Wäsche beziehungsweise Neutralisation erfolgen.

Dazu kann das Reaktionsgemisch mit einer derartigen Menge an Lagerstabilisator, bevorzugt Hydrochinonmonomethylether versetzt werden, dass nach Abtrennung des Lösungsmittels 100 - 500, bevorzugt 200 - 500 und besonders bevorzugt 200 - 400 ppm davon im Zielester (Rückstand) enthalten sind.

Die destillative Abtrennung der Hauptmenge an Lösungsmittel erfolgt beispielsweise in einem Rührkessel mit Doppelwandheizung und/oder innenliegenden Heizschlangen unter vermindertem Druck, beispielsweise bei 20 - 700 mbar, bevorzugt 30 bis 500 und besonders bevorzugt 50 - 150 mbar und einer Temperatur von 40 - 120 °C.

Selbstverständlich kann die Destillation auch in einem Fallfilm- oder Dünnschichtverdampfer erfolgen. Dazu wird das Reaktionsgemisch, bevorzugt mehrmals im Kreislauf, unter vermindertem Druck, beispielsweise bei 20 - 700 mbar, bevorzugt 30 bis 500 und besonders bevorzugt 50 - 150 mbar und einer Temperatur von 40 - 80 °C durch den Apparat geführt.

Vorteilhaft kann ein inertes Gas, bevorzugt ein sauerstoffhaltiges Gas, besonders bevorzugt Luft oder ein Gemisch aus Luft und Stickstoff (Magerluft) in den Destillationsapparat eingeleitet werden, beispielsweise 0,1 - 1, bevorzugt 0,2 - 0,8 und besonders bevorzugt 0,3 - 0,7 m³ sauerstoffhaltiges Gas pro m³ Reaktionsgemisch und Stunde.

Der Restlösungsmittelgehalt im Rückstand beträgt nach der Destillation in der Regel unter 5 Gew.-%, bevorzugt 0,5 - 5 % und besonders bevorzugt 1 bis 3 Gew.-%.

Das abgetrennte Lösungsmittel wird kondensiert und bevorzugt wiederverwendet.

Falls erforderlich kann zusätzlich oder anstelle der Destillation eine Lösungsmittelstrippung (o4) durchgeführt werden.

Dazu wird der Zielester, der noch geringe Lösungsmittelmengen enthält, auf 50 - 90 °C, bevorzugt 80 - 90 °C erwärmt und die restlichen Lösungsmittelmengen mit einem geeigneten Gas in einer geeigneten Apparatur entfernt. Zur Unterstützung kann gegebenenfalls auch ein Vakuum angelegt werden.

Geeignete Gase sind unter den Strippbedingungen inerte Gase, bevorzugt sauerstoffhaltige Gase, besonders bevorzugt Luft oder Gemische aus Luft und Stickstoff (Magerluft) oder Wasserdampf, insbesondere solche, die auf 50 bis 100 °C temperiert sind.

Die Strippgasmenge beträgt beispielsweise 5 - 20, besonders bevorzugt 10 - 20 und ganz besonders bevorzugt 10 bis 15 m³ Strippgas pro Kubikmeter Reaktionsgemisch und Stunde.

Überschüssige (Meth)acrylsäure wird gegebenenfalls im Vakuum aus dem Reaktionsgemisch abdestilliert.

Gewünschtenfalls kann das Veresterungsgemisch in einem beliebigen Stadium des Aufarbeitungsverfahrens, bevorzugt nach Wäsche/Neutralisation und gegebenenfalls erfolgter Lösungsmittel-Entfernung einer Filtration (o7) unterworfen werden, um ausgefallene Spuren an Salzen sowie gegebenenfalls enthaltenem Entfärbungsmittel zu entfernen.

In einer Ausführungsform verbleibt der eingesetzte Veresterungskatalysator (C) im wesentlichen im Reaktionsgemisch.

In einer Ausführungsform wird auf eine Vorwäsche (o5), Nachwäsche (o6) sowie auf Neutralisation (o2) verzichtet.

Das aus Schritt (r1) resultierenden Reaktionsgemische weisen in der Regel eine Säurezahl - bestimmt gemäß DIN EN 3682 - bis zu 200 mg KOH/g, bevorzugt von 5 bis 100, besonders bevorzugt von 5 bis 50 und ganz besonders bevorzugt von 5 bis 30 mg KOH/g auf und eine OH-Zahl - bestimmt gemäß DIN 53240 - bis zu 120 mg KOH/g, bevorzugt von 10 bis 100, besonders bevorzugt von 15 bis 70 und ganz besonders bevorzugt von 20 bis 90 mg KOH/g auf.

Das aus Schritt (r1) resultierenden Reaktionsgemische enthält im wesentlichen 20 bis zu 80 Gew.-% vollständig verestertes alkoxyliertes Polyol (A), 20 bis 50 Gew.-% nicht oder teilweise verestertes alkoxyliertes Polyol (A), 0,001 bis zu 25 Gew.-% nicht umgesetzte (Meth)acrylsäure (B), 0,1 bis 5 Gew.-% Veresterungskatalysator (C) und 0,01 bis 1 Gew.-% Polymerisationsinhibitor (D) sowie gegebenenfalls Lösungsmittel (E), mit der Maßgabe, dass die Gesamtsumme 100 Gew.-% beträgt.

### Zu Schritt (r2)

Das in Schritt (r1) - gegebenenfalls unter Einsatz von einer oder mehreren der oben genannten optionalen Schritte (o1 bis (o7) - erhaltene Reaktionsgemisch wird in einem zweiten Schritt, der als Schritt (r2) bezeichnet wird, mit einer mindestens zwei Alkylenoxid-Einheiten enthaltenden Verbindung (G) umgesetzt.

Einzusetzende Epoxidverbindungen (G) sind solche mit zwei oder mehr Epoxidgruppen pro Molekül. Verbindungen (G) mit zwei Epoxidgruppen pro Molekül sind bevorzugt.

In Betracht kommen z.B. Glycidylether aliphatischer oder aromatische Polyole. Derartige Produkte werden im Handel in großer Zahl angeboten. Besonders bevorzugt sind Polyglycidylverbindungen vom Bisphenol A-, -F- oder -B-Typ, deren vollständig hydrierte Derivate und Glycidylether mehrwertiger Alkohole, z.B. des 1,4-Butandiol, 1,4-Cyclohexandimethanol, Neopentylglykol, des 1,6-Hexandiol, des Glycerin, Trimethylolpropan und des Pentaerythrit. Beispiele für der-artige Polyepoxidverbindungen sind Epikote® 812 und Epikote® 828, Epikote® 1001, Epikote® 1007 und Epikote® 162 der Firma Resolution Performance Products, Rütapox® 0162, Rütapox® 0164 und Rütapox® 0165 der Firma Bakelite AG, Araldit® DY 0397 der Firma Vantico AG.

Ganz besonders bevorzugt sind Bisphenol-A-diglycidylether, 1,4-Butandiol-diglycidylether, Trimethylolpropantriglycidylether und Pentaerythrittetraglycidylether, insbesondere Bisphenol-A-diglycidylether.

Die Epoxidverbindungen (G) werden dem Reaktionsgemisch aus der Veresterung im allgemeinen in Mengen von 5 - 60 Gew.-%, bevorzugt 5 - 30 Gew.-% und besonders bevorzugt 5 - 20 Gew.-%, bezogen auf das Reaktionsgemisch (ohne Lösungsmittel), zugegeben. Ganz besonders bevorzugt werden die Epoxidverbindungen in ungefähr äquimolaren Mengen, bezogen auf die noch vorhandenen Säureäquivalente im Reaktionsgemisch, eingesetzt, beispielsweise ein Verhältnis Epoxidgruppen : Säuregruppen von 0,8 - 2,5 : 1, bevorzugt 0,9 - 2,0 : 1, besonders bevorzugt 1,0 - 1,5 : 1 und ganz besonders bevorzugt 1,0 - 1,2 : 1 mol/mol.

Bei der Umsetzung mit den Epoxidverbindungen (G) wird überschüssig eingesetzte bzw. nicht umgesetzte Säure, insbesondere (Meth)acrylsäure als Epoxidester gebunden.

Die Umsetzung mit Epoxidverbindungen erfolgt bevorzugt bei 90 bis 130, besonders bevorzugt bei 100 bis 110°C und wird so lange durchgeführt, bis das Reaktionsgemisch eine Säurezahl gem. DIN EN 3682 unter 5, besonders bevorzugt unter 2 mg KOH/g (ohne Lösungsmittel) aufweist.

Schritt (r2) kann gewünschtenfalls in Gegenwart von Katalysatoren (H) durchgeführt werden. Geeignete Verbindungen (H) sind z.B. quartäre Ammonium- oder Phosphoniumverbindungen, tertiäre Amine, Phosphine wie Triphenylphosphin oder Lewisbasen wie Thiodiglycol.

Die Katalysatoren (H) werden vorzugsweise in Mengen von 0,01 bis 5, besonders bevorzugt von 0,1 bis 3 Gew.-%, bezogen auf das Reaktionsgemisch, eingesetzt

Die Temperatur bei der Reaktion (r2) wird vorzugsweise auf 40 bis 130 °C, besonders bevorzugt 50 bis 120 und ganz besonders bevorzugt 60 bis 120 °C eingestellt.

Das aus Schritt (2) resultierende Reaktionsgemisch weist in der Regel eine Säurezahl gem. DIN EN 3682 unter 5, bevorzugt unter 4 mg KOH/g auf und eine OH-Zahl gem. DIN 53240 bis zu 250 mg KOH/g, bevorzugt bis zu 150, besonders bevorzugt von 10 bis 100 und ganz besonders bevorzugt von 20 bis 90 mg KOH/g auf. Es enthält im wesentlichen von 20 bis zu 80 Gew.-% vollständig verestertes Polyol (A), 20 bis 50 Gew.-% nicht oder teilweise verestertes Polyol (A), 0,001 bis zu 25 Gew.-% epoxydiertes nicht oder teilweise verestertes Polyol (A), 0,1 bis 15 Gew.-% Epoxyester der (Meth)acrylsäure, Veresterungskatalysator und Polymerisationsinhibitor, Spuren unumgesetzter (Meth)acrylsäure sowie gegebenenfalls Lösungsmittel, mit der Maßgabe, dass die Gesamtsumme 100 Gew.-% beträgt.

### Zu Schritt (r3)

Der abschließende Reaktionsschritt (r3) erfolgt in Gegenwart eines Wismut-haltigen Katalysators (L). Und zwar wird das Reaktionsgemisch aus (r2) in der abschließenden Stufe (r3) derart behandelt, dass das Reaktionsgemisch aus (r2) mit mindestens einem Polyisocyanat (J) und mindestens einem Hydroxyalkyl(meth)acrylat (K) sowie gegebenenfalls mindestens einer Verbindung (M) mit einer oder mehreren gegen Isocyanat reaktiven Gruppe in Gegenwart eines Wismut-haltigen Katalysators (L) umgesetzt wird.

Wismut (englisch: Bismuth) ist bekanntlich ein chemisches Element mit dem Elementsymbol Bi. Unter Wismut-haltigen Katalysatoren sind Substanzen oder Substanzgemische zu verstehen, die Wismut enthalten. Dabei gibt es hinsichtlich der chemischen Struktur dieser Substanzen an sich keine Einschränkungen. Es können sowohl organische, als auch anorganische Wismut-Verbindungen als Katalysatoren (L) eingesetzt werden. Ferner können einkernige oder mehrkernige Wismut-Verbindungen eingesetzt werden, also solche, bei denen ein oder mehrere Wismut-Atome pro Struktureinheit der jeweiligen Wismut-Verbindung vorliegen.

Als Wismut-haltige Katalysatoren (L) kommen vorzugsweise Wismutverbindungen der Oxidationsstufe +3 in Betracht, insbesondere mit folgenden Anionen: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²⁻, S₂O₅²⁻, S₂O₆²⁻, S₂O₇²⁻, S₂O₈²⁻, H₂PO₂⁻, H₂PO₄⁻, HPO₄²⁻, PO₄³⁻, P₂O₇⁴⁻, (OCₓH₂ₓ+1)⁻, (CₓH₂ₓ₋₁O₂)⁻, (CₓH₂ₓ₋₃O₂)⁻ sowie (Cₓ₊₁H₂ₓ₋₂O₄)²⁻, wobei x für die Zahlen 1 bis 20 steht.
In einer Ausfiihrungsform setzt man als Katalysatoren (L) Wismutcarboxylate ein und zwar solche, die mindestens sechs Kohlenstoffatome aufweisen, insbesondere Wismut-octoate, - ethylhexanoate, -neodecanoate, oder -pivalate; beispielsweise K-KAT 348, XC-B221; XC-C227, XC 8203 und XK-601 von King Industries, TIB KAT 716, 716LA, 716XLA, 718, 720, 789 von TIB Chemicals und solchen von Shepherd Lausanne, sowie beispielsweise Borchi® Kat 24; 315; 320 von OMG Borchers GmbH, Langenfeld, Deutschland.
Bevorzugt als Katalysatoren (L) sind Wismut-(III)-carboxylate, bei denen das Anion den Formeln (CₓH₂ₓ₋₁O₂)⁻ sowie (Cₓ₊₁H₂ₓ₋₂O₄)²⁻ mit n gleich 1 bis 20, gehorcht. Besonders bevorzugte Salze weisen als Anionen Monocarboxylate der allgemeinen Formel (CₓH₂ₓ₋₁O₂)⁻ auf, wobei x für die Zahlen 1 bis 20, bevorzugt 1 bis 10 steht. Hierbei sind insbesondere zu erwähnen Format, Acetat, Propionat, Hexanoat, Neodecanoat und 2-Ethyl-hexanoat.
Besonders bevorzugt sind Wismut(III)-neodecanoat und/oder Wismut(III)-2-ethylhexanoat.

Als Polyisocyanat (J) kommen beispielsweise aliphatische, aromatische und cycloaliphatische Di- und Polyisocyanate mit einer NCO Funktionalität von mindestens 1,8, bevorzugt 1,8 bis 5 und besonders bevorzugt 2 bis 4 in Frage, sowie deren Isocyanurate, Biurete, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5-trimethyl-5-(isocyanatomethyl)-cyclohexan(Isophorondiisocyanat), 1,3- oder 1,4-Bis(isocyanatomethyl)cyclohexan oder 2,4-, oder 2,6-Diisocyanato-1-methylcyclohexa sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxy-lylendiisocyanat, 1,4-Diisocyanatobenzol oder Diphenylether-4,4'-diisocyanat.
Es können auch Gemische der genannten Diisocyanate vorliegen.

Bevorzugt sind 2,4- oder 2,6-Toluylendiisocyanat und deren Isomerengemische, Hexamethylendiisocyanat, 1,3-Bis(isocyanatomethyl)cyclohexan, Isophorondiisocyanat und Di(isocyanatocyclohexyl)methan.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretoniminmodi-fizierte Polyisocyanate von geradlinigen oder verzweigten C₄-C₂₀-Alkylendüsocyanaten, cyclo-aliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew.-% bezogen auf das Di- und Polyisocyanat(gemisch), bevorzugt 15 bis 60 Gew.-% und besonders bevorzugt 20 bis
55 Gew.-%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Weiterhin bevorzugt sind:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Trisisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 3 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiondiisocyanate können in den erfindungsgemäßen Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
6) Uretonimin-modifizierte Polyisocyanate.

Die Polyisocyanate 1) bis 6) können im Gemisch, gegebenenfalls auch im Gemisch mit Diisocyanaten, eingesetzt werden.

Als Hydroxyalkyl(meth)acrylate (K) kommen Verbindungen in Betracht, die mindestens eine, vorzugsweise 1 bis 3, besonders bevorzugt 1 bis 2 und ganz besonders bevorzugt eine Hydroxygruppe und mindestens eine, vorzugsweise 1 bis 3, besonders bevorzugt 1 bis 2 und ganz besonders bevorzugt eine (Meth)acrylatgruppe tragen.

Hydroxyalkyl(meth)acrylate (K) können z.B. Monoester von (Meth)acrylsäure mit Di- oder Polyolen sein, die vorzugsweise 2 bis 20 C-Atome und wenigstens zwei, bevorzugt zwei Hydroxylgruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, 1,6-Hexandiol, 2-Methyl-1,5-pentandiol, 2-Ethyl-1,4-butandiol, 1,4-Dimethylolcyclohexan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 378, Poly-1,3-propandiol mit einem Molgewicht zwischen 134 und 400 oder Polyethylenglykol mit einem Molgewicht zwischen 238 und 458.

Geeignete Verbindungen (K) sind etwa: 2-Hydroxyethyl(meth)acrylat, 2- oder 3-Hydroxypropyl(meth)-acrylat, 1,4-Butandiolmono(meth)acrylat, Neopentylglykolmono(meth)acrylat, Glycerinmono- und di(meth)acrylat, Trimethylolpropanmono- und di(meth)acrylat, Pentaerythritmono-, -di- und -tri(meth)acrylat.

Vorzugsweise wählt man die Verbindungen (K) aus folgenden Verbindungen aus: Mono(meth)acrylsäureester von ethoxyliertem Trimethylolpropan, Di(meth)acrylsäureester von ethoxyliertem Trimethylolpropan, Butandioldiacrylat, Bisphenol-A-diglycidyl-diacrylat, Butandiol-diglycidylether-diacrylat, Mono-Di-Tri-Acrylsäureester von Pentaerythrit-tri/tetraepoxid. Butandiol-diglycidylether-diacrylat und Bisphenol-A-diglycidyl-diacrylat sind als Verbindungen (K) besonders bevorzugt.

Falls gewünscht können gegebenenfalls Verbindungen (M) während oder nach Beendigung der Umsetzung des Reaktionsgemisches aus (r2) mit (J) und (K) zugegeben werden.

Bei den Verbindungen (M) handelt es sich um Verbindungen mit einer oder mehreren gegenüber Isocyanat reaktiven Gruppe. Dies können beispielsweise 1 bis 20 Kohlenstoffatome aufweisende Monoalkohole, Mercaptane oder Monoamine, bevorzugt Monoalkohole sein, z.B. Methanol, Ethanol, *iso*-Propanol, n-Pro-panol, n-Butanol, *iso*-Butanol, *sek*-Butanol, *tert-*Butanol, Ethylenglykolmonomethylether, Ethylenglykolmonoethylether, Diethylenglykolmonomethylether, Diethylenglykolmonoethylether, 1,3-Propandiolmonomethylether, 1,2-Propandiolmonoethylether, 1,2-Propandiolmonomethylether, n-Hexanol, n-Heptanol, n-Octanol, n-Decanol, n-Dodecanol, 2-Ethylhexanol, Cyclopentanol, Cyclohexanol, Cyclooctanol, Cyclododecanol, Triethylenglykolmonomethylether, Triethylenglykolmonoethylether, n-Pentanol, Stearylalkohol, Cetylalkohol, Laurylalkohol, Cyclopent-2-en-1-ol, Cyclopent-3-en-1-ol, Cyclohex-2-en-1-ol, Allylalkohol, Methylamin, Ethylamin, *iso*-Propylamin, n-Propylamin, n-Butylamin, *iso*-Butylamin, *sek*-Butylamin, *tert*-Butylamin, n-Pentylamin, n-Hexyl-amin, n-Heptylamin, n-Octylamin, n-Decylamin, n-Dodecylamin, 2-Ethylhexylamin, Stearylamin, Cetylamin, Laurylamin, Dimethylamin, Diethylamin, Di-n-Propylamin, Di-*iso*-Propylamin, Di-n-Butylamin, Dihexylamin, Dioctylamin, Ethylmethylamin, *Iso*-Propyl-Methylamin, n-Butylmethylamin, *tert*-Butylmethylamin, *Iso*-Propyl-Ethylamin, n-Butylethylamin, *tert-*Butylethylamin, Cyclopentyl-amin, Cyclohexylamin, Cyclooctylamin, Cyclododecylamin, Morpholin, Piperidin, Pyrrolidin, N-Methylpiperazin, Monoethanolamin, Monopropanolamin, Dipropanolamin, Methanthiol, Ethanthiol, *iso*-Propanthiol, n-Propanthiol, n-Butanthiol, *iso-*Butanthiol, *sek*-Butanthiol oder *tert*-Butanthiol.

Pro NCO Moläquivalent in (J) werden 0,05 - 0,6 mol (K) und 0,2 - 0 mol (M) eingesetzt, wobei die Summe der Menge von (K)+(M) der um die molare Menge an OH- und Säuregruppen im Reaktionsgemisch aus der Stufe (r2) verminderten NCO-Moläquivalente entspricht.

Das durch Umsetzung mit dem Polyisocyanat (J) erhältliche Reaktionsgemisch (N) weist in der Regel keine signifikante Säurezahl, keine signifikante OH-Zahl (jeweils < 5, bevorzugt < 3, besonders bevorzugt < 2 und insbesondere < 1 mg KOH/g) und einen NCO-Gehalt (berechnet als NCO, Molgewicht 42 g/mol) von < 0,5, bevorzugt < 0,3 besonders bevorzugt < 0,2 und ganz besonders bevorzugt < 0,1 Gew.-% auf.

Das so erhältliche erfindungsgemäße Reaktionsgemisch (N) kann für strahlungshärtbare Beschichtungssysteme oder Lacke verwendet werden, die neben dem erfindungsgemäßen Reaktionsgemisch (N) noch Reaktivverdünner (O), Photoinitiatoren (P) und andere lacktypische Additive (Q) enthalten können.

Als Reaktivverdünner - Verbindungen (O) - kommen strahlungshärtbare, radikalisch oder kationisch polymerisierbare Verbindungen mit nur einer ethylenisch ungesättigten, copolymerisierbaren Gruppe in Betracht.

Geeignete strahlenhärtbare, radikalisch polymerisierbare Reaktivverdünner sind z. B. die Triacrylester des Trimethylolpropan, Tetraacrylester des Pentaerythrit und deren ethoxilierten und/oder propoxylierten Derivate, Diacrylester des Dipropylenglykol, Tripropylenglykol, Diethylenglykol, 1,2-Ethandiol, 1,3- oder 1,4-Butandiol oder 1,6-Hexandiol.

Genannt seien außerdem z.B. C₁-C₂₀-Alkyl(meth)acrylate, Vinylaromaten mit bis zu 20 C-Atomen.

Als (Meth)acrylsäurealkylester bevorzugt sind solche mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Als vinylaromatische Verbindungen kommen z.B. Vinyltoluol, α-Butylstyrol, 4-n-Butylstyrol, 4-n-Decylstyrol und vorzugsweise Styrol in Betracht.

Als Photoinitiatoren (P) können im Prinzip alle dem Fachmann bekannten Photoinitiatoren verwendet werden. In Betracht kommen z.B. Mono- oder Bisacylphosphinoxide Irgacure® 819 (Bis(2,4,6-Trimethyl-benzoyl)phenylphosphinoxid), 2,4,6-Trimethylbenzoyldiphenylphosphinoxid (Lucirin® TPO), Ethyl-2,4,6-trimethylbenzoylphenylphosphinat, Benzophenone, Hydroxyacetophenone, Phenylglyoxylsäure und ihre Derivate oder Gemische dieser Photoinitiatoren. Als Beispiele seien genannt Benzophenon, Acetophenon, Acetonaphthochinon, Methylethylketon, Valerophenon, Hexanophenon, alpha-Phenylbutyrophenon, p-Morpholinopropio-phenon, Dibenzosuberon, 4-Morpholinobenzophenon, 4-Morpholinodeoxybenzoin, p-Diacetyl-benzol, 4-Aminobenzophenon, 4'-Methoxyacetophenon, beta-Methylanthrachinon, *tert*-Butylanthra-chinon, Anthrachinoncarbonysäureester, Benzaldehyd, alpha-Tetralon, 9-Acetylphenanthren, 2-Acetylphenanthren, 10-Thioxanthenon, 3-Acetylphenanthren, 3-Acetylindol, 9-Fluorenon, 1-Indanon, 1,3,4-Triacetylbenzol, Thioxanthen-9-on, Xanthen-9-on, 2,4-Dimethylthioxanthon, 2,4-Diethylthioxanthon, 2,4*-*Di*-iso*propylthioxanthon, 2,4-Dichlorthioxanthon, Benzoin, Benzoin-*iso*-butylether, Chloroxanthenon, Benzoin-tetrahydropyranylether, Benzoin-methylether, Benzoin-ethylether, Benzoinbutylether, Benzoin-*iso*-propylether, 7-H-Benzoin-methylether, Benz[de]-anthracen-7-on, 1-Naphthaldehyd, 4,4'-Bis(dimethylamino)benzophenon, 4-Phenylbenzophenon, 4-Chlorbenzophenon, Michlers Keton, 1-Acetonaphthon, 2-Acetonaphthon, 1-Benzoylcyclohexan-1-ol, 2-Hydroxy-2,2-dimethylacetophenon, 2,2-Dimethoxy-2-phenylacetophenon, 2,2-Di-ethoxy-2-phenylacetophenon, 1,1-Dichloracetophenon, 1-Hydroxyacetophenon, Acetophenondimethylketal, o-Methoxybenzophenon, Triphenylphosphin, Tri-o-Tolylphosphin, Benz[a]-anthracen-7,12-dion, 2,2-Diethoxyacetophenon, Benzilketale, wie Benzildimethylketal, 2-Methyl-1-[4-(methylthio)phenyl]-2-morpholinopropan-1-on, Anthrachinone wie 2-Methylanthrachinon, 2-Ethylanthrachinon, 2-*tert*-Butylanthrachinon, 1-Chloranthrachinon, 2-Amylanthrachinon und 2,3-Butandion.

Unter den genannten Photoinitiatoren sind Phosphinoxide, alpha-Hydroxyketone und Benzophenone bevorzugt.

Es können auch Gemische verschiedener Photoinitiatoren verwendet werden.

Die Photoinitiatoren können allein oder in Kombination mit einem Photopolymerisationspromotor, z.B. vom Benzoesäure-, Amin- oder ähnlichem Typ verwendet werden.

Als lacktypische Additive (Q) können beispielsweise Antioxidantien, Oxidationsinhibitoren, Stabilisatoren, Aktivatoren (Beschleuniger), Füllmittel, Pigmente, Farbstoffe, Entgasungsmittel, Glanzmittel, antistatische Agentien, Flammschutzmittel, Verdicker, thixotrope Agentien, Verlaufshilfsmittel, Bindemittel, Antischaummittel, Duftstoffe, oberflächenaktive Agentien, Viskositätsmodifikatoren, Weichmacher, Plastifizierer, klebrigmachende Harze (Tackifier), Chelatbildner oder Verträglichkeitsmittel (compatibilizer) verwendet werden.

Weiterhin können ein oder mehrere photochemisch und/oder thermisch aktivierbare Initiatoren zugesetzt werden, z.B. Kaliumperoxodisulfat, Dibenzoylperoxid, Cyclohexanonperoxid, Di-tert.-Butylperoxid, Azobis-*iso*-butyronitril, Cyclohexylsulfonylacetylperoxid, Di*-iso-*propylpercarbonat, *tert*-Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylper-oxid, Cumolhydroperoxid, Dicumylperoxid, t-Butylperbenzoat, silylierte Pinakole, die z. B. unter dem Handelsnamen ADDID 600 der Firma Wacker kommerziell erhältlich sind oder Hydroxyl-gruppen-haltige Amin-N-Oxide, wie 2,2,6,6-Tetramethylpiperidin-N-oxyl, 4-Hydroxy-2,2,6,6-Tetramethylpiperidin-N-oxyl etc.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketon verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate etc.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z. B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Weiterhin geeignete Stabilisatoren sind beispielsweise N-Oxyle, wie z.B. 4-Hydroxy-2,2,6,6-te-tramethyl-piperidin-N-oxyl, 4-Oxo-2,2,6,6-tetramethyl-piperidin-N-oxyl, 4-Acetoxy-2,2,6,6-tetra-methyl-piperidin-N-oxyl, 2,2,6,6-tetramethyl-piperidin-N-oxyl, 4,4',4"-Tris(2,2,6,6-tetramethyl-piperidin-N-oxyl)-phosphit oder 3-Oxo-2,2,5,5-tetramethyl-pyrrolidin-N-oxyl, Phenole und Naphthole, wie z.B. p-Aminophenol, p-Nitrosophenol, 2*-tert.-*Butylphenol, 4-*tert*.-Butylphenol, 2,4-di-*tert*.-Butylphenol, 2-Methyl-4-*tert*.-Butylphenol, 4-Methyl-2,6-*tert*.-Butylphenol (2,6-*tert*.-Butyl-p-Kresol) oder 4-*tert*.-Butyl-2,6-dimethylphenol, Chinone, wie z.B. Hydrochinon oder Hydrochinonmonomethylether, aromatische Amine, wie z.B. N,N-Diphenylamin, N-Nitroso-diphenylamin, Phenylendiamine, wie z.B. N,N'-Dialkyl-para-phenylendiamin, wobei die Alkylreste gleich oder verschieden sein können und jeweils unabhängig voneinander aus 1 bis 4 Kohlenstoffatome bestehen und geradkettig oder verzweigt sein können, Hydroxylamine, wie z.B. N,N-Diethylhydroxylamin, Harnstoffderivate, wie z.B. Harnstoff oder Thioharnstoff, phosphorhaltige Verbindungen, wie z.B. Triphenylphosphin, Triphenylphosphit oder Triethylphosphit oder schwefelhaltige Verbindungen, wie z.B. Diphenylsulfid oder Phenothiazin.

Typische Zusammensetzungen für strahlungshärtbare Massen sind beispielsweise:
N) 40 - 100 Gew.-%, bevorzugt 50 - 90, besonders bevorzugt 60 - 90 und insbesondere 60 - 80 Gew.-%,
O) 0 - 60 Gew.-%, bevorzugt 5 - 50, besonders bevorzugt 6 - 40 und insbesondere 10 - 30 Gew.-%,
P) 0 - 20 Gew.-%, bevorzugt 0,5 - 15, besonders bevorzugt 1 - 10 und insbesondere 2 - 5 Gew.-% sowie
Q) 0 - 50 Gew.-%, bevorzugt 2 - 40, besonders bevorzugt 3 - 30 und insbesondere 5 - 20 Gew.-%,
mit der Maßgabe, dass (N), (O), (P) und (Q) zusammen 100 Gew.-% ergeben.

Die erfindungsgemäßen strahlungshärtbaren Urethan(meth)acrylate eignen sich insbesondere zur Verwendung als oder in Massen, welche durch energiereiche Strahlung gehärtet werden können.

Diese Massen können als bzw. in Beschichtungsmassen, z.B. Lacken, Druckfarben, oder Klebstoffen, als Druckplatten, als Formkörper, oder als Gießmasse verwendet werden.

Substrate für die Beschichtung können beispielsweise sein Textil, Leder, Metall, Kunststoff, Glas, Holz, Papier oder Pappe, bevorzugt Holz oder Metall und besonders bevorzugt Holz.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die gegebenenfalls enthaltenen flüchtigen Bestandteile der Bechichtungsmasse, gegebenenfalls unter Erhitzen, entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen. Die Beschichtungsstärke liegt in der Regel in einem Bereich von etwa 3 bis 1000 g/m² und vorzugsweise 10 bis 200 g/m².

Ein weiterer Erfindungsgegenstand ist ein Verfahren zum Beschichten von Substraten, wobei man die Beschichtungsmasse auf das Substrat aufbringt und gegebenenfalls bei Temperaturen bis zu 160°C trocknet, mit Elektronenstrahlen oder UV Belichtung unter sauerstoffhaltiger Atmosphäre oder bevorzugt unter Inertgas härtet und gegebenenfalls anschließend bei Temperaturen bis zu 160°C nachtrocknet.

Die Trocknung kann auch zusätzlich oder anstelle der thermischen Trocknung durch NIR-Strahlung erfolgen, wobei als NIR-Strahlung hier elektromagnetische Strahlung im Wellenlängenbereich von 760 nm bis 2,5 µm, bevorzugt von 900 bis 1500 nm bezeichnet ist.

Gegebenenfalls kann, wenn mehrere Schichten des Beschichtungsmittels übereinander aufgetragen werden, nach jedem Beschichtungsvorgang eine thermische und/oder NIR Trocknung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von 200 bis 700 nm oder durch Bestrahlung mit energiereichen Elektronen (Elektronenstrahlung; 150 bis 300 keV). In einer bevorzugten Ausführungsform setzt man zur Strahlungshärtung UV-Licht im Wellenlängenbereich von 200 bis 500 nm und insbesondere von 250 bis 400 nm ein. Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm². Selbstverständlich sind auch mehrere Strahlungsquellen für die Härtung einsetzbar, z.B. zwei bis vier. Diese können auch in jeweils unterschiedlichen Wellenlängebereichen strahlen.

Die Bestrahlung kann gegebenenfalls auch unter Ausschluss von Sauerstoff, z. B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser.

Ein weiterer Erfindungsgegenstand sind strahlungshärtbare Beschichtungsmassen, enthaltend ein strahlungshärtbares Urethan(meth)acrylat gemäß der vorliegenden Erfindung.

Die erfindungsgemäßen Beschichtungsmassen eignen sich für Innen- oder Außenbeschichtungen, also solche Anwendungen, die dem Tageslicht ausgesetzt sind, bevorzugt von Gebäuden oder Gebäudeteilen, Innenbeschichtungen, Straßenmarkierungen, Beschichtungen auf Fahrzeugen und Flugzeugen. Insbesondere werden die erfindungsgemäßen Beschichtungsmassen als Holzlacke oder in Holzlacken für den Innenbereich, speziell als Parkettlacke eingesetzt.

Ein weiterer Erfindungsgegenstand ist die Verwendung der erfindungsgemäßen Beschichtungsmassen als Holzlacke für den Innenbereich, insbesondere als Parkettlacke.

In dieser Schrift verwendete Prozentangaben beziehen sich, falls nicht anders angegeben, auf Gewichtsprozente.

### Beispiele

### Eingesetzte Substanzen

**Pluriol A18 TERC:** Anlagerungsprodukt von 15 mol Ethylenoxid pro 1 mol Trimethylolpropanacrylat (Fa. BASF SE)
**BADGE:** Bisphenol-A-diglycidylether (Epikote 828 F, handelsübliches Diepoxid der Fa. Momentive)
**TBABr:** Tetra(n-butyl)ammoniumbromid (Katalysator)
**BADGDA:** Bisphenol-A-diglycidyl-diacrylat (CAS-Nr. 67952-50-5)
**Kerobit:** 2,6-Ditertiärbutyl-p-kresol (Kerobit TBK; Stabilisator; Fa. BASF)
**Hydroxytempo:** 4-Hydroxy-TEMPO, (Stabilisator; Fa. Sigma-Aldrich)
**Borchi-Kat 315:** Wismut-Neodecanoat (Wismut-Katalysator) (Fa. Borchers OMG Group)
**Basonat HI 100:** Polyisocyanat basierend auf Isocyanurat-modifiziertem Hexamethylendiisocyanat. (Fa. BASF SE)
**Normalisierter Sand:** Zur Bestimmung der Abriebfestigkeit wurde als normalisierter Sand ein Aluminium-Oxyd-Granulat eingesetzt (Alodur ESK 240, Fa. Taber Industries)

### Mess- und Prüfmethoden

Einleitend sei festgestellt, dass zwei der nachstehend beschrieben Testmethoden, und zwar "Viskosität" und "Vergelung" die Lagerstabilität charakterisieren. Idealerweise soll nämlich zum einen die Viskosität der erfindungsgemäßen Substanzen, d.h. der Urethanacrylate, auch bei monatelanger Lagerung unverändert bleiben, was insbesondere einschließt, dass keine unerwünschte Viskositätserhöhung erfolgt, zum andern soll praktisch keine Bildung fester Strukturen erfolgen, d.h. es sollen sich weder feste Partikel bilden, noch soll eine Gelbildung erfolgen. Bei nicht-lagerstabilen Systeme dagegen kommt es bei Lagerung zu einer beginnenden Selbstvernetzung, was sich auf beide genannten Parameter, also die Viskosität und die Vergelung negativ auswirkt.

**Viskosität:** Die Viskosität der Substanzen als solche wurde gemessen mit einem Brookfield-Viskosimeter bei 25 °C, Geschwindigkeitsgefälle von 1000 s-1, gemäß DIN EN ISO 3219/A.3. Die Viskosität wird in Pascalsekunden (PAs) angegeben. Im Rahmen der durchgeführten Untersuchungen ist die Viskosität wie oben dargestellt ein Indikator für die Lagerstabilität. Die Viskosität wurde einerseits direkt nach der Herstellung der zu prüfenden Substanzen gemessen und dann erneut nach 17-tägiger bzw. nach 231-tägiger Lagerung der Substanzen bei 20 °C.

**Gelbildung:** Unter Gelbildung wird hier einerseits verstanden, dass sich ein Gel bildet, zum, anderen, dass kleine feste Partikel sichtbar werden. Die Beurteilung erfolgt visuell. Im Rahmen der durchgeführten Untersuchungen ist die Gelbildung wie oben dargestellt ein Indikator für die Lagerstabilität. Der Parameter Gelbildung wurde einerseits direkt nach der Herstellung der zu prüfenden Substanzen geprüft und dann erneut nach 17-tägiger bzw. nach 231-tägiger Lagerung der Substanzen bei 20 °C.

**Pendeldämpfung (PD):** Die Pendeldämpfung (oft auch als Pendelhärte bezeichnet) von Beschichtungen, die resultierten, wenn die zu prüfenden Substanzen auf die Oberflächen fester Substrate aufgebracht und mittels UV-Strahlung gehärtet worden waren, die sogenannten Pendelhärte nach König, wurden gemessen nach DIN 53157. Bei dieser Methode wird die Pendeldämpfung hier in Schlägen angegeben.

**Abriebfestigkeit:** Der Abrieb ist ein Maß für Festigkeit einer Beschichtung. Die Abriebfestigkeit wurde im sogenannten "Falling Sand Test" wie folgt bestimmt und als mg Substanzverlust pro 1000 Umdrehungen angegeben:
Für den Falling Sand Test wurde ein Taber^{®} Abraser Gerät eingesetzt, welches mit einem Sandspenderrohr ausgerüstet war. Die formulierten Lacke (bestehend aus Prüfsubstanz plus 4% des Photoinitiators Irgacure 500) wurden mit einem Kastenrakel auf ein Substrat, im vorliegenden Falle auf Glas, aufgetragen (Nassfilmdicke = 200µm Naßfilmdicke) aufgetragen. Anschließend wurde zweimal mit einer CK Lampe, 120W, mit 5m/min UV gehärtet, um eine komplette Aushärtung zu gewährleisten. Nach 48-stündiger Konditionierung (T = 23°C, Luftfeuchte 50%) wurde die beschichtete Glasplatte in das Taber^{®} Abraser Gerät eingesetzt und mit einer konstante Geschwindigkeit von 60 Umdrehungen pro Minute rotiert. Durch das Sandspenderrohr fiel normalisierter Sand bei einer Geschwindigkeit von 20,7 bis 21,0 g pro Minute auf das rotierende, beschichtete Substrat (= auf die beschichtete Glasplatte). Auf der dem Sandspender-Rohr gegenüberliegenden Seite wurde der Sand mit einem Absaugsystem wieder entfernt. Der Abrieb fand statt durch zwei Lederrollen, welche den Sand auf dem beschichteten Substrat vor dem Absaugsystem einarbeiteten und damit zu einem Lack-Substanzverlust führten. Um die Falling-Sand-Performance zu bestimmen, wurde das beschichtete Substrat vor und nach Abrieb (nach 1000 Umdrehungen) gewogen und die Differenz in mg bestimmt. Es wurde eine Dreifachbestimmung durchgeführt.

### Herstellbeispiele

### Beispiel 1 (B1) - erfindungsgemäß

Schritt (r1): In einer Apparatur mit Wasserabscheider wurden 3117 g Pluriol A18 TERC mit 912 g Acrylsäure und 18,3 g 96%-iger Schwefelsäure (Veresterungskatalysator) in 1350 g Methylcyclohexan (Lösungsmittel) bei einer Innentemperatur von 98 bis 105 °C verestert. Die Stabilisierung erfolgte dabei mit 3,6 g t-Butyl-p-Kresol, 3,6 g Triphenylphosphit, 3,6 g hypophosphoriger Säure, 12,0 g 4-Methoxyphenol und 0,111 g Phenothiazin. Nach 10-stündiger Reaktionszeit wurden 122,1 g einer 75%-igen wäßrigen TBABr-Lösung gegeben und das Lösungsmittel im Vakuum (20 mbar) bei 112 °C abdestilliert. Die Säurezahl nach der Destillation betrug 45,8 mg KOH/g. Die erhaltene Reaktionsmischung wird als (R1) bezeichnet.
Schritt (r2): In einem Dreihalskolben wurden 3370 g der im Schritt (R1) erhaltenen Reaktionsmischung (M1), deren Säurezahl 45,8 mg KOH/g betrug, mit 460,56 g BADGE in Gegenwart von 75,83 g des Katalysators TBABr bei 107-108 °C bis zu einer Säurezahl (SZ) von 3,5 umgesetzt. Die entstehende Reaktionsmischung (R2) wies folgende Kennzahlen auf: Viskosität: 0,53 Pas; Iodfarbzahl: 1,4.
Schritt (r3): 1350g der Reaktionsmischung (R2) wurden anschließend mit 150 g BADGDA versetzt und gerührt, so dass eine homogene Mischung (M1) entstand. Dann wurden 350 g der Mischung (M1) mit 0,39 g Kerobit, 0,04 g Hydroxytempo und 0,35 g Borchi Kat 315 versetzt, wobei die Mischung (M2) resultierte. Zu dieser Mischung (M2) wurden anschließend bei 20 °C 24,50 g Basonat HI 100 zugetropft. Dann wurde bei einer Außentemperatur von 80°C bis auf Innentemperatur von 60° geheizt und nach Erreichen der Innentemperatur von 60 °C wurde das Ölbad entfernt man ließ auf Raumtemperatur (20 °C) abkühlen.

Das erhaltene Urethanacrylat wurde wie folgt charakterisiert:
Iodfarbzahl: 1,8; NCO Wert (freier Gehalt NCO in %): 0%.
Viskosität (sofort nach Herstellung): 3,8 Pas
Viskosität (nach 231-tägiger Lagerung bei 20 °C): 3,8 Pas
Gelbildung (sofort nach Herstellung): homogen, keine Gelanteile, keine Partikelbildung Gelbildung (nach 231-tägiger Lagerung bei 20 °C): homogen, keine Gelanteile, keine Partikelbildung
Die Messdaten bezüglich Viskosität und Gelbildung belegen eine ganz ausgezeichnete Lagerstabilität über die gesamte Zeit von 231 Tagen (33 Wochen).

### Beispiel 2 (B2) - zum Vergleich

Wie Beispiel 1, jedoch wurden in Schritt (r3) als Katalysator nicht 0,35 g Borchi Kat 315 eingesetzt, sondern 0,35 g Dibutylzinnlaurat.

Das erhaltene Urethanacrylat wurde wie folgt charakterisiert:
Iodfarbzahl: 1,0; NCO Wert (freier Gehalt NCO in %): 0%.
Viskosität (sofort nach Herstellung): 3,7 Pas
Viskosität (nach 17-tägiger Lagerung bei 20 °C): 4,7 Pas
Gelbildung (sofort nach Herstellung): homogen, keine Gelanteile, keine Partikelbildung Gelbildung (nach 17-tägiger Lagerung bei 20 °C): inhomogen, Partikelbildung
Die Messdaten bezüglich Viskosität und Gelbildung belegen, dass keine Lagerstabilität gegeben ist. Bereits nach 17 Tagen, also nur etwas mehr als 2 Wochen) erwies sich die Substanz als nicht lagerstabil.

### Anwendungstechnische Untersuchungen

### Anwendungsbeispiel 1

### Bestimmung der Abriebfestigkeit auf Basis der Substanz gemäß Beispiel 1

Gemäß der oben genannten Vorgehensweise für den Taber^{®} Abraser Test wurden 2 Proben präpariert.

50 g der Substanz gemäß Beispiel 1 wurden mit 2 g Irgacure 500 vermengt, mit einem Kastenrakel 200µm auf Glas aufgetragen und im direkten Anschluss zweimal mit UV-Licht ausgehärtet. Der fertige Film wies nach Konditionierung folgende Eigenschaften auf:
Pendelhärte (nach König, in Schlägen): 46 Schläge
Abrieb (Mittelwert aus Dreifachbestimmung): 15,5 mg
Die Abriebfestigkeit war damit ganz erheblich besser als die Abriebfestigkeit gemäß dem unten stehenden Anwendungsbeispiel 2 (Vergleichsbeispiel).

### Anwendungsbeispiel 2

### Bestimmung der Abriebfestigkeit auf Basis der Substanz gemäß Beispiel 2

50 g der Substanz gemäß Beispiel 2 wurden mit 2 g Irgacure 500 vermengt, mit einem Kastenrakel 200µm auf Glas aufgetragen und im direkten Anschluss zweimal mit UV-Licht ausgehärtet. Der fertige Film wies nach Konditionierung folgende Eigenschaften auf:
Pendelhärte (nach König, in Schlägen): 44 Schläge
Abriebfestigkeit (Mittelwert aus Dreifachbestimmung): 20,3 mg

## Patentansprüche

1. Strahlungshärtbare Urethan(meth)acrylate, die erhältlich sind, indem man folgende Schritte durchführt:
(r1) teilweise Umsetzung eines alkoxylierten Polyols (A) mit (Meth)acrylsäure (B) in Anwesenheit mindestens eines Veresterungskatalysators (C) und mindestens eines Polymerisationsinhibitors (D) sowie gegebenenfalls eines mit Wasser ein Azeotrop bildenden Lösungsmittels (E),
(o1) gegebenenfalls Entfernen zumindest eines Teils des in r1) entstehenden Wassers aus dem Reaktionsgemisch, wobei o1 während und/oder nach r1) erfolgen kann,
(o2) gegebenenfalls Neutralisation des Reaktionsgemischs,
(o3) falls ein Lösungsmittel (E) eingesetzt wurde, gegebenenfalls Entfernen dieses Lösungsmittels durch Destillation und/oder
(o4) Strippen mit einem unter den Reaktionsbedingungen inerten Gas,
(r2) Umsetzung des nach dem letzten der vorstehenden Reaktionsschritte erhaltenen Reaktionsgemisches mit einer mindestens zwei Epoxygruppen aufweisenden Verbindung (G) gegebenenfalls in Gegenwart eines Katalysators (H) und
(r3) Umsetzung des Reaktionsgemisches aus (r2) mit mindestens einem Polyisocyanat (J) und mindestens einem Hydroxyalkyl(meth)acrylat (K) und gegebenenfalls mindestens einer weiteren eine oder mehrere gegenüber Isocyanat reaktive Gruppe enthaltenden Verbindung (M) in Gegenwart eines Katalysators (L),
mit der Maßgabe, dass es sich bei dem in Schritt (r3) eingesetzten Katalysator (L) um einen Wismut-haltigen Katalysator handelt.

2. Urethan(meth)acrylate nach Anspruch 1, wobei es sich bei dem alkoxylierten Polyol (A) ein Anlagerungsprodukt von 1 bis 20 mol Ethylenoxid an 1 mol eines Polyols handelt, der ausgewählt wird aus der Gruppe Trimethylolpropan, Trimethylolethan und Pentaerythrit.

3. Urethan(meth)acrylate nach Anspruch 1 oder 2, wobei man die Epoxidverbindung (G) auswählt aus der Gruppe Bisphenol-A-diglycidylether, 1,4-Butandiol-diglycidylether, Trimethylolpropantriglycidylether und Pentaerythrittetraglycidylether.

4. Urethan(meth)acrylate nach einem der Ansprüche 1 bis 3, wobei man das Polyisocyanat (J) auswählt aus der Gruppe 2,4- oder 2,6-Toluylen-diisocyanat und deren Isomerengemische, Hexamethylendiisocyanat, 1,3-Bis(isocyanato-methyl)cyclohexan, Isophorondiisocyanat oder Di(isocyanatocyclohexyl)methan.

5. Urethan(meth)acrylate nach einem der Ansprüche 1 bis 4, wobei man das Hydroxyalkyl(meth)acrylat (K) auswählt aus der Gruppe Butandiol-diglycidylether-diacrylat und Bisphenol-A-diglycidyl-diacrylat.

6. Urethan(meth)acrylate nach einem der Ansprüche 1 bis 5, wobei man als Wismut-haltigen Katalysator (L) Wismut(III)-neodecanoat und/oder Wismut(III)-2-ethylhexanoat einsetzt.

7. Verfahren zur Herstellung strahlungshärtbarer Urethan(meth)acrylate, wobei man folgende Schritte durchführt:
(r1) teilweise Umsetzung eines alkoxylierten Polyols (A) mit (Meth)acrylsäure (B) in Anwesenheit mindestens eines Veresterungskatalysators (C) und mindestens eines Polymerisationsinhibitors (D) sowie gegebenenfalls eines mit Wasser ein Azeotrop bildenden Lösungsmittels (E),
(o1) gegebenenfalls Entfernen zumindest eines Teils des in r1) entstehenden Wassers aus dem Reaktionsgemisch, wobei o1 während und/oder nach r1) erfolgen kann,
(o2) gegebenenfalls Neutralisation des Reaktionsgemischs,
(o3) falls ein Lösungsmittel (E) eingesetzt wurde, gegebenenfalls Entfernen dieses Lösungsmittels durch Destillation und/oder
(o4) Strippen mit einem unter den Reaktionsbedingungen inerten Gas,
(r2) Umsetzung des nach dem letzten der vorstehenden Reaktionsschritte erhaltenen Reaktionsgemisches mit einer mindestens zwei Epoxygruppen aufweisenden Verbindung (G) gegebenenfalls in Gegenwart eines Katalysators (H) und
(r3) Umsetzung des Reaktionsgemisches aus (r2) mit mindestens einem Polyisocyanat (J) und mindestens einem Hydroxyalkyl(meth)acrylat (K) und gegebenenfalls mindestens einer weiteren eine oder mehrere gegenüber Isocyanat reaktive Gruppe enthaltenden Verbindung (M) in Gegenwart eines Katalysators (L),
mit der Maßgabe, dass es sich bei dem in Schritt (r3) eingesetzten Katalysator (L) um einen Wismut-haltigen Katalysator handelt.

8. Verfahren nach Anspruch 8, wobei es sich bei dem alkoxylierten Polyol (A) ein Anlagerungsprodukt von 1 bis 20 mol Ethylenoxid an 1 mol eines Polyols handelt, der ausgewählt wird aus der Gruppe Trimethylolpropan, Trimethylolethan und Pentaerythrit.

9. Verfahren nach Anspruch 7 oder 8, wobei man die Epoxidverbindung (G) auswählt aus der Gruppe Bisphenol-A-diglycidylether, 1,4-Butandiol-diglycidylether, Trimethylolpropantriglycidylether und pentaerythrittetraglycidylether.

10. Verfahren nach einem der Ansprüche 7 bis 9, wobei man das Polyisocyanat (J) auswählt aus der Gruppe 2,4- oder 2,6-Toluylen-diisocyanat und deren Isomerengemische, Hexamethylendiisocyanat, 1,3-Bis(isocyanato-methyl)cyclohexan, Isophorondiisocyanat oder Di(isocyanatocyclohexyl)methan.

11. Verfahren nach einem der Ansprüche 7 bis 10, wobei man das Hydroxyalkyl(meth)acrylat (K) auswählt aus der Gruppe Butandiol-diglycidylether-diacrylat und Bisphenol-A-diglycidyl-diacrylat.

12. Verfahren nach einem der Ansprüche 7 bis 11, wobei man als Wismut-haltigen Katalysator (L) Wismut(III)-neodecanoat und/oder Wismut(III)-2-ethylhexanoat einsetzt.

13. Strahlungshärtbare Beschichtungsmassen, enthaltend ein strahlungshärtbares Urethan(meth)acrylat gemäß einem der vorstehenden Ansprüche.

14. Verwendung der Beschichtungsmassen gemäß Anspruch 13 als Holzlacke für den Innenbereich.

## Claims

1. A radiation-curable urethane (meth)acrylate obtainable by performing the following steps:
(r1) partially reacting an alkoxylated polyol (A) with (meth)acrylic acid (B) in the presence of at least one esterification catalyst (C) and of at least one polymerization inhibitor (D) and also optionally of a solvent (E) which forms an azeotrope with water,
(o1) optionally removing at least some of the water formed in r1) from the reaction mixture, it being possible for o1) to take place during and/or after r1),
(o2) optionally neutralizing the reaction mixture,
(o3) if a solvent (E) has been used, optionally removing this solvent by distillation and/or
(o4) stripping with a gas which is inert under the reaction conditions,
(r2) reacting the reaction mixture obtained after the last of the above reaction steps with a compound (G) having at least two epoxy groups, optionally in the presence of a catalyst (H), and
(r3) reacting the reaction mixture from (r2) with at least one polyisocyanate (J) and with at least one hydroxyalkyl (meth)acrylate (K) and optionally with at least one further compound (M) containing one or more than one isocyanate-reactive group, in the presence of a catalyst (L),
with the proviso that the catalyst (L) used in step (r3) is a bismuth-containing catalyst.

2. The urethane (meth)acrylate according to claim 1, wherein the alkoxylated polyol (A) is an adduct of 1 to 20 mol of ethylene oxide with 1 mol of a polyol selected from the group of trimethylolpropane, trimethylolethane and pentaerythritol.

3. The urethane (meth)acrylate according to claim 1 or 2, wherein the epoxide compound (G) is selected from the group of bisphenol A diglycidyl ether, 1,4-butanediol diglycidyl ether, trimethylolpropane triglycidyl ether and pentaerythritol tetraglycidyl ether.

4. The urethane (meth)acrylate according to any of claims 1 to 3, wherein the polyisocyanate (J) is selected from the group of 2,4- or 2,6-tolylene diisocyanate and isomer mixtures thereof, hexamethylene diisocyanate, 1,3-bis(isocyanatomethyl)cyclohexane, isophorone diisocyanate or di(isocyanatocyclohexyl)methane.

5. The urethane (meth)acrylate according to any of claims 1 to 4, wherein the hydroxyalkyl (meth)acrylate (K) is selected from the group of butanediol diglycidyl ether diacrylate and bisphenol A diglycidyl diacrylate.

6. The urethane (meth)acrylate according to any of claims 1 to 5, wherein the bismuth-containing catalyst (L) used comprises bismuth(III) neodecanoate and/or bismuth(III) 2-ethylhexanoate.

7. A process for preparing a radiation-curable urethane (meth)acrylate by performing the following steps:
(r1) partially reacting an alkoxylated polyol (A) with (meth)acrylic acid (B) in the presence of at least one esterification catalyst (C) and of at least one polymerization inhibitor (D) and also optionally of a solvent (E) which forms an azeotrope with water,
(o1) optionally removing at least some of the water formed in r1) from the reaction mixture, it being possible for o1) to take place during and/or after r1),
(o2) optionally neutralizing the reaction mixture,
(o3) if a solvent (E) has been used, optionally removing this solvent by distillation and/or
(o4) stripping with a gas which is inert under the reaction conditions,
(r2) reacting the reaction mixture obtained after the last of the above reaction steps with a compound (G) having at least two epoxy groups, optionally in the presence of a catalyst (H), and
(r3) reacting the reaction mixture from (r2) with at least one polyisocyanate (J) and with at least one hydroxyalkyl (meth)acrylate (K) and optionally with at least one further compound (M) containing one or more than one isocyanate-reactive group, in the presence of a catalyst (L),
with the proviso that the catalyst (L) used in step (r3) is a bismuth-containing catalyst.

8. The process according to claim 8, wherein the alkoxylated polyol (A) is an adduct of 1 to 20 mol of ethylene oxide with 1 mol of a polyol selected from the group of trimethylolpropane, trimethylolethane and pentaerythritol.

9. The process according to claim 7 or 8, wherein the epoxide compound (G) is selected from the group of bisphenol A diglycidyl ether, 1,4-butanediol diglycidyl ether, trimethylolpropane triglycidyl ether and pentaerythritol tetraglycidyl ether.

10. The process according to any of claims 7 to 9, wherein the polyisocyanate (J) is selected from the group of 2,4- or 2,6-tolylene diisocyanate and isomer mixtures thereof, hexamethylene diisocyanate, 1,3-bis(isocyanatomethyl)cyclohexane, isophorone diisocyanate or di(isocyanatocyclohexyl)methane.

11. The process according to any of claims 7 to 10, wherein the hydroxyalkyl (meth)acrylate (K) is selected from the group of butanediol diglycidyl ether diacrylate and bisphenol A diglycidyl diacrylate.

12. The process according to any of claims 7 to 11, wherein the bismuth-containing catalyst (L) used comprises bismuth(III) neodecanoate and/or bismuth(III) 2-ethylhexanoate.

13. A radiation-curable coating composition comprising a radiation-curable urethane (meth)acrylate according to any of the preceding claims.

14. The use of the coating composition according to claim 13 as wood varnish for the interior sector.

## Revendications

1. (Méth)acrylates d'uréthane durcissables par rayonnement, qui peuvent être obtenus en réalisant les étapes suivantes :
(r1) la mise en réaction partielle d'un polyol alcoxylé (A) avec de l'acide (méth)acrylique (B) en présence d'au moins un catalyseur d'estérification (C) et d'au moins un inhibiteur de polymérisation (D), ainsi qu'éventuellement d'un solvant (E) formant un azéotrope avec l'eau,
(o1) éventuellement l'élimination d'au moins une partie de l'eau formée en r1) du mélange réactionnel, o1) pouvant avoir lieu pendant et/ou après r1),
(o2) éventuellement la neutralisation du mélange réactionnel,
(o3) si un solvant (E) a été utilisé, éventuellement l'élimination de ce solvant par distillation, et/ou
(o4) l'extraction avec un gaz inerte dans les conditions de réaction,
(r2) la mise en réaction du mélange réactionnel obtenu après la dernière des étapes de réaction précédentes avec un composé (G) comprenant au moins deux groupes époxy, éventuellement en présence d'un catalyseur (H), et
(r3) la mise en réaction du mélange réactionnel de (r2) avec au moins un polyisocyanate (J) et au moins un (méth)acrylate d'hydroxyalkyle (K) et éventuellement au moins un autre composé (M) contenant un ou plusieurs groupes réactifs avec les isocyanates, en présence d'un catalyseur (L),
à condition que le catalyseur (L) utilisé à l'étape (r3) soit un catalyseur qui contient du bismuth.

2. (Méth)acrylates d'uréthane selon la revendication 1, dans lesquels le polyol alcoxylé (A) est un produit d'addition de 1 à 20 moles d'oxyde d'éthylène sur 1 mole d'un polyol, qui est choisi dans le groupe constitué par le triméthylolpropane, le triméthyloléthane et le pentaérythritol.

3. (Méth)acrylates d'uréthane selon la revendication 1 ou 2, dans lesquels le composé d'époxyde (G) est choisi dans le groupe constitué par l'éther diglycidylique de bisphénol A, l'éther diglycidylique de 1,4-butanediol, l'éther triglycidylique de triméthylolpropane et l'éther tétraglycidylique de pentaérythritol.

4. (Méth)acrylates d'uréthane selon l'une quelconque des revendications 1 à 3, dans lesquels le polyisocyanate (J) est choisi dans le groupe constitué par le diisocyanate de 2,4- ou 2,6-toluylène et leurs mélanges d'isomères, le diisocyanate d'hexaméthylène, le 1,3-bis(isocyanato-méthyl)cyclohexane, le diisocyanate d'isophorone ou le di(isocyanatocyclohexyl)méthane.

5. (Méth)acrylates d'uréthane selon l'une quelconque des revendications 1 à 4, dans lesquels le (méth)acrylate d'hydroxyalkyle (K) est choisi dans le groupe constitué par le diacrylate d'éther diglycidylique de butanediol, et le diacrylate diglycidylique de bisphénol A.

6. (Méth)acrylates d'uréthane selon l'une quelconque des revendications 1 à 5, dans lesquels du néodécanoate de bismuth (III) et/ou du 2-éthylhexanoate de bismuth (III) sont utilisés en tant que catalyseur contenant du bismuth (L).

7. Procédé de fabrication de (méth)acrylates d'uréthane durcissables par rayonnement, selon lequel les étapes suivantes sont réalisées :
(r1) la mise en réaction partielle d'un polyol alcoxylé (A) avec de l'acide (méth)acrylique (B) en présence d'au moins un catalyseur d'estérification (C) et d'au moins un inhibiteur de polymérisation (D), ainsi qu'éventuellement d'un solvant (E) formant un azéotrope avec l'eau,
(o1) éventuellement l'élimination d'au moins une partie de l'eau formée en r1) du mélange réactionnel, o1) pouvant avoir lieu pendant et/ou après r1),
(o2) éventuellement la neutralisation du mélange réactionnel,
(o3) si un solvant (E) a été utilisé, éventuellement l'élimination de ce solvant par distillation, et/ou
(o4) l'extraction avec un gaz inerte dans les conditions de réaction,
(r2) la mise en réaction du mélange réactionnel obtenu après la dernière des étapes de réaction précédentes avec un composé (G) comprenant au moins deux groupes époxy, éventuellement en présence d'un catalyseur (H), et
(r3) la mise en réaction du mélange réactionnel de (r2) avec au moins un polyisocyanate (J) et au moins un (méth)acrylate d'hydroxyalkyle (K) et éventuellement au moins un autre composé (M) contenant un ou plusieurs groupes réactifs avec les isocyanates, en présence d'un catalyseur (L),
à condition que le catalyseur (L) utilisé à l'étape (r3) soit un catalyseur qui contient du bismuth.

8. Procédé selon la revendication 8, dans lequel le polyol alcoxylé (A) est un produit d'addition de 1 à 20 moles d'oxyde d'éthylène sur 1 mole d'un polyol, qui est choisi dans le groupe constitué par le triméthylolpropane, le triméthyloléthane et le pentaérythritol.

9. Procédé selon la revendication 7 ou 8, dans lequel le composé d'époxyde (G) est choisi dans le groupe constitué par l'éther diglycidylique de bisphénol A, l'éther diglycidylique de 1,4-butanediol, l'éther triglycidylique de triméthylolpropane et l'éther tétraglycidylique de pentaérythritol.

10. Procédé selon l'une quelconque des revendications 7 à 9, dans lequel le polyisocyanate (J) est choisi dans le groupe constitué par le diisocyanate de 2,4- ou 2,6-toluylène et leurs mélanges d'isomères, le diisocyanate d'hexaméthylène, le 1,3-bis(isocyanatométhyl)cyclohexane, le diisocyanate d'isophorone ou le di(isocyanatocyclohexyl)méthane.

11. Procédé selon l'une quelconque des revendications 7 à 10, dans lequel le (méth)acrylate d'hydroxyalkyle (K) est choisi dans le groupe constitué par le diacrylate d'éther diglycidylique de butanediol, et le diacrylate diglycidylique de bisphénol A.

12. Procédé selon l'une quelconque des revendications 7 à 11, dans lequel du néodécanoate de bismuth (III) et/ou du 2-éthylhexanoate de bismuth (III) sont utilisés en tant que catalyseur contenant du bismuth (L).

13. Matériaux de revêtement durcissables par rayonnement, contenant un (méth)acrylate d'uréthane durcissable par rayonnement selon l'une quelconque des revendications précédentes.

14. Utilisation des matériaux de revêtement selon la revendication 13 en tant que vernis pour le bois pour zones intérieures.
